# EUROPEAN PATENT APPLICATION

(11) **EP 4 607 445 A1**
(43) Date of publication of application: **27.08.2025**
(21) Application number: 24781044.3
(22) Date of filing: 29.02.2024
(51) Int. Cl.: G06Q 50/10, G06Q 50/20, G06N 3/09, G06F 11/34, G06V 40/18, G06V 40/16, G06N 20/00, G06F 16/903

(54) **METHOD FOR TRACING KNOWLEDGE LEVEL OF USER CONSUMING CONTENT AND RECOMMENDING CONTENT ON BASIS OF KNOWLEDGE LEVEL OF USER, AND COMPUTING DEVICE FOR PERFORMING SAME**

(30) Priority: 24.03.2023 KR 20230038418; 12.07.2023 KR 20230090669
(71) Applicant: Samsung Electronics Co., Ltd., Suwon-si, Gyeonggi-do 16677 (KR)
(72) Inventor: SEO, Sungmok, Suwon-si, Gyeonggi-do 16677 (KR); KIM, Taehun, Suwon-si, Gyeonggi-do 16677 (KR); LEE, Jaebok, Suwon-si, Gyeonggi-do 16677 (KR); CHO, Hyunkook, Suwon-si, Gyeonggi-do 16677 (KR); SACHDEVA, Kapil, Suwon-si, Gyeonggi-do 16677 (KR); GOYAL, Pushpinder, Suwon-si, Gyeonggi-do 16677 (KR)
(74) Representative: Gulde & Partner
(86) International application number: PCT/KR2024/002689
(87) International publication number: WO 2024/205051

(57) **Abstract**

A method of tracing a knowledge level of a user, includes: sensing a reaction of the user consuming content; determining an understanding of the user with respect to the content based on the reaction of the user; inputting the understanding and information about the content into a knowledge tracing model; and updating the knowledge level of the user based on an output from the knowledge tracing model.

## Description

### Technical Field

The disclosure relates to a method of tracing a knowledge level of a user consuming content, and recommending content based on the knowledge level of the user, and a computing device for performing the same.

### Background Art

These days, people are inundated with a massive amount of content. Because the amount of content existing on the Internet is large but time is limited, a service for recommending content based on a user's interests may be provided.

However, related art content recommendation services consider the type of content or the user's field of interest when performing the recommendation, but there is a limitation that a knowledge level of the user is not considered. When the knowledge level of the user related to the understanding of content may be measured or predicted, it may be usefully utilized when recommending content.

Regarding this, knowledge tracing technology is being used to provide customized learning for each user in the field of Artificial Intelligence in Education (AlEd). For example, when a user solves a given problem, the knowledge level of the user may be updated based on whether the answer is correct, and accordingly, a problem having a difficulty suitable for the user's level may be recommended to the user.

The above knowledge tracing technology is useful in a curriculum for examinees. However, because the existing knowledge tracing technology has been developed based on a problem-solving learning method, there is a limitation that it is difficult to expand and apply to an environment where problems and correct answers are not present, such as content like articles, videos, etc.

### Disclosure

### Technical Solution

According to an embodiment of the disclosure, a method of tracing a knowledge level of a user based on a reaction of the user consuming content may include sensing the reaction of the user consuming the content, determining understanding with respect to the content based on the reaction of the user, inputting the understanding and information about the content to a knowledge tracing model, and updating the knowledge level of the user by using an output from the knowledge tracing model.

According to an embodiment of the disclosure, provided is a computing device including a communication interface configured to communicate with an external electronic device, a memory in which a program for tracing a knowledge level of a user and recommending content is stored, and at least one processor, the at least one processor being configured to execute the program to, sense a reaction of a user consuming content, determine understanding with respect to the content based on the reaction of the user, input the understanding and information about the content into a knowledge tracing model, and update the knowledge level of the user by using an output from the knowledge tracing model.

According to an embodiment of the disclosure, provided is a computer-readable recording medium having recorded thereon a program, which when executed by a computer, performs at least one of the embodiments of the above method.

According to an embodiment of the disclosure, provided is a computer program may be stored in a medium, when executed by a computer, to perform at least one of the embodiments of the above method.

### DESCRIPTION OF DRAWINGS

The above and other aspects, features, and advantages of certain embodiments of the present disclosure will be more apparent from the following description taken in conjunction with the accompanying drawings, in which:
FIG. 1 is a diagram showing a system environment to which one or more embodiments of the disclosure may be applied;
FIG. 2 is a block diagram for illustrating detailed components included in a server and a mobile terminal of FIG. 1 according to one or more embodiments;
FIG. 3 is a diagram for describing modules used to trace a knowledge level of a user by using a knowledge tracing model, according to one or more embodiments of the disclosure;
FIG. 4 is a diagram for describing modules performing an operation of recommending content to a user based on a knowledge level of the user traced by the knowledge tracing model, according to one or more embodiments of the disclosure;
FIGS. 5 to 11 are diagrams for describing processes in which a server and a mobile terminal trace a knowledge level of a user and recommend content to the user by using the modules shown in FIGS. 3 and 4, according to one or more embodiments of the disclosure;
FIGS. 12 and 13 are diagrams for describing processes in which the server and the mobile terminal trace a knowledge level of a user who consumed content and then recommend content to the user based on a result of the tracing, according to one or more embodiments of the disclosure; and
FIGS. 14 to 19 are flowcharts for describing a method of tracing a knowledge level of a user who consumed content and recommending content based on the knowledge level of the user, according to one or more embodiments of the disclosure.

### Mode for Invention

In describing example embodiments of the disclosure, a description of technical details well known in the art to which the present disclosure pertains and not directly associated with the present disclosure will be omitted. This omission of the unnecessary description is intended to prevent the main idea of the present disclosure from being unclear and more clearly transfer the main idea. Furthermore, terms to be described hereunder have been defined by taking into consideration functions in the present disclosure, and may be different depending on a user, an operator's intention or practice. Accordingly, each term should be defined based on contents over the entire specification.

For the same reason, in the accompanying drawings, some elements may be exaggerated, omitted, or schematically illustrated. Further, the size of each element does not entirely reflect the actual size. In the drawings, identical or corresponding elements are provided with identical reference numerals.

The advantages and features of the present disclosure and ways to achieve them will be apparent by making reference to embodiments as described below in detail in conjunction with the accompanying drawings. However, the disclosure may have different forms and should not be construed as being limited to the descriptions set forth herein. The embodiments suggested herein are for rendering the description of the disclosure complete and are set forth to provide a complete understanding of the scope of the disclosure to one of ordinary skill in the art to which the disclosure pertains. One or more embodiments of the disclosure may be defined according to claims. Throughout the specification, like reference numerals denote the same elements. Furthermore, in describing one or more embodiments of the disclosure, a detailed description of a related known function or configuration will be omitted if it is deemed to make the gist of the disclosure unnecessarily vague. Furthermore, terms to be described hereunder have been defined by taking into consideration functions in the present disclosure, and may be different depending on a user, an operator's intention or practice. Accordingly, each term should be defined based on contents over the entire specification.

In one or more embodiments of the disclosure, each block of the flowchart illustrations, and combinations of blocks in the flowchart illustrations, may be implemented by computer program instructions. Computer program instructions may be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. Computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. Computer program instructions may also be stored in computer-usable or computer-readable memory that may direct a computer or other programmable data processing equipment.

Also, each block of the flowchart illustrations may represent a module, segment, or portion of code, which includes one or more executable instructions for implementing the specified logical function(s). In one or more embodiments of the disclosure, the functions noted in the blocks may occur out of order. For example, two blocks shown in succession may in fact be executed substantially concurrently, or the blocks may sometimes be executed in the reverse order, depending upon the functionality involved.

The term "unit", as used in embodiments of the disclosure may denote software or a hardware component, such as a field programmable gate array (FPGA) or an application-specific integrated circuit (ASIC), and the "unit" performs specific tasks. However, the "unit" does not always have a meaning limited to software or hardware. The "unit" may be constructed either to be stored in an addressable storage medium or to execute one or more processors. In one or more embodiments of the disclosure, the "unit" may include, for example, components, such as software components, object-oriented software components, class components, and task components, processes, functions, attributes, procedures, sub-routines, segments of program code, drivers, firmware, microcode, circuitry, data, databases, data structures, tables, arrays, and variables. The functionalities provided in the components and "units" may be combined into fewer components and "units" or may be further separated into additional components and "units." The "unit", in one or more embodiments of the disclosure, may include at least one processor.

First, the meanings of the terms frequently used herein are defined before describing embodiments of the disclosure.

In the disclosure, 'knowledge level' of a user denotes a degree of user's capability to understand content, and according to one or more embodiments of the disclosure, the knowledge level may be expressed as a value of probability that the user would understand a certain content. The knowledge level of the user may be also referred to as a 'degree of understanding', and the higher the knowledge level of the user is, the higher the probability of understanding difficult content is. In one or more embodiments of the disclosure, the knowledge level of the user may vary depending on a field of content. For example, a user may have higher knowledge level in the field of economics, but lower knowledge level in the field of politics. Also, a user may have higher knowledge level in micro and macroeconomics fields, but may have lower knowledge level in the field of international economy, that is, the user may have the knowledge level varying depending on detailed fields of the economics. Also, according to one or more embodiments of the disclosure, the knowledge level of the user may vary depending on the level of the content. For example, for one user, a probability of understanding content having high difficulty may differ from a probability of understanding content having lower difficulty.

'Knowledge tracing' denotes an operation of continuously evaluating the knowledge level of the user based on performance of the user. In one or more embodiments of the disclosure, the performance of the user may denote whether the user understands the content or not. That is, the knowledge level of the user may be traced based on whether the user understands the content.

A 'level' of content denotes a difficulty of the content. Because high level content has high difficulty, the knowledge level of the user (e.g., knowledge level or language level about the field to which the content belongs) has to be high in order to understand the content of high level.

In the disclosure, 'understanding' of the user about the content denotes a result representing whether the user who consumes the content understands the content or not, and when the user understands the content, it is indicated as 'success' and when the user does not understand the content, it is indicated as 'failure'. According to one or more embodiments of the disclosure, understanding does not binarized into the success and failure, but may be expressed as 'a degree of understanding' in a real number from 0 to 1.

Hereinafter, a method of tracing the knowledge level of the user based on a reaction of the user after consuming content and a method of recommending content to the user based on the knowledge level of the user are described according to one or more embodiments of the disclosure with reference to accompanying drawings.

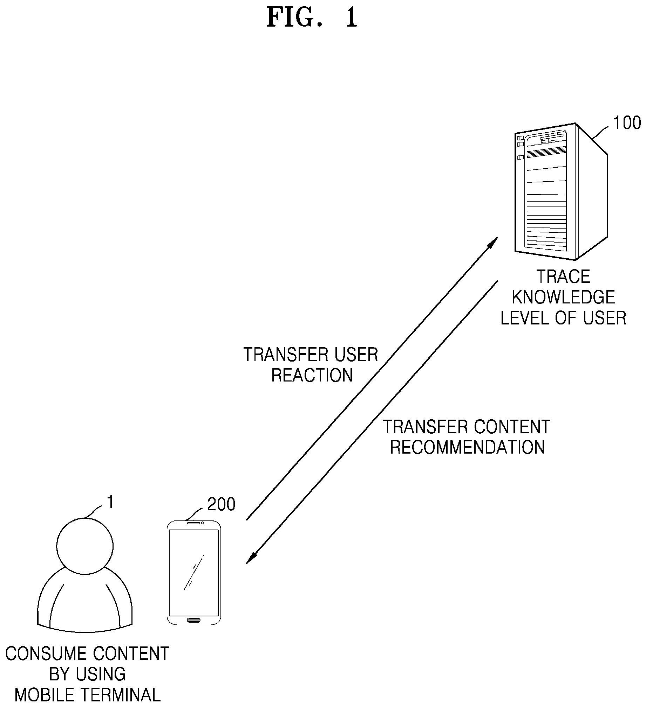

FIG. 1 is a diagram showing a system environment to which one or more embodiments of the disclosure may be applied. Referring to FIG. 1, a system according to one or more embodiments of the disclosure may include a server 100 and a mobile terminal 200. The server 100 and the mobile terminal 200 may communicate with each other via a wired and/or wireless network.

A user 1 may consume content by using the mobile terminal 200. The content consumed by the user 1 may denote one of text, sound, image, or video or a combination of two or more thereof, or may be implemented in various types (e.g., hologram).

According to one or more embodiments of the disclosure, the server 100 traces a knowledge level of the user 1, and may recommend content to the user 1 based on the knowledge level of the user 1. The server 100 may trace the knowledge level of the user 1 based on reaction of the user 1 after consuming the content. To this end, the mobile terminal 200 may sense the reaction of the user 1 during or after consuming the content, and may transfer the sensed reaction of the user to the server 100. A method of sensing the reaction of the user 1 and a method of tracing the knowledge level of the user 1 based on the sensed reaction are described in detail below with reference to accompanying drawings.

In the disclosure, as shown in FIG. 1, one or more embodiments of the disclosure, in which the server 100 traces the knowledge level of the user 1 based on the reaction of the user 1, and based on the result, the server 100 recommends the content to the user 1 via the mobile terminal 200, is described below in detail. However, some or all the operations described to be performed by the server 100 in the embodiments of the disclosure may be performed by the mobile terminal 200.

For example, the mobile terminal 200 may not transfer the reaction of the user 1 to the server 100, but may directly trace the knowledge level of the user 1 based on the reaction of the user 1. Alternatively, when the mobile terminal 200 determines understanding of the user 1 about the content based on the reaction of the user 1 and transfers the determination result to the server 100, the server 100 may trace the knowledge level of the user 1 based on the understanding of the user 1. Alternatively, content recommendation based on the knowledge level of the user 1 may be performed by the mobile terminal 200, instead of the server 100.

One or more embodiments of the disclosure, in which an application (e.g., content recommendation application) installed on the mobile terminal 200 may only provide a user interface (UI) to the user 1 for content reproduction and content recommendation, and operations such as tracing the knowledge level of the user 1 or selecting content to be recommended may be performed by the server 100, is described below. However, as described above, some or all of the operations performed by the server 100 may be performed by the mobile terminal 200, and thus, the operations described to be performed by the server 100 in the disclosure may be also performed by the mobile terminal 200.

Also, in the disclosure, one server 100 performs the operations, but two or more servers may perform the operations separately.

Hereinafter, configurations of the server 100 and the mobile terminal 200 for implementing embodiments of the disclosure are described with reference to accompanying drawings, and processes of performing the detailed example, by the server 100 and the mobile terminal 200, are described below in detail.

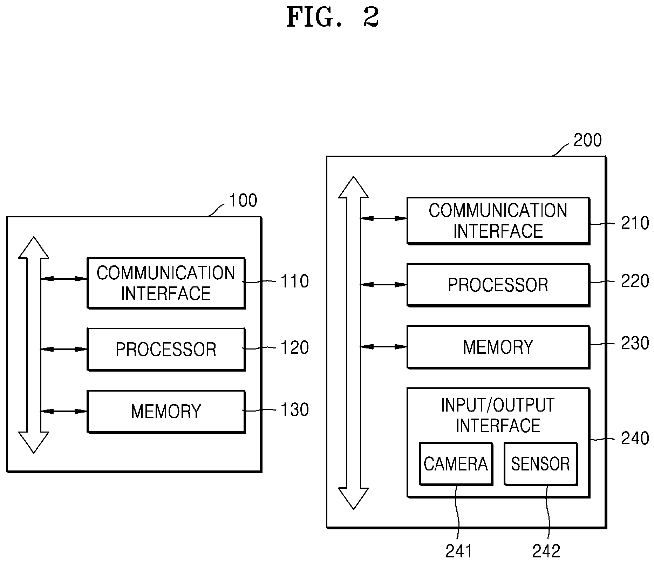

FIG. 2 is a block diagram for illustrating detailed components included in the server 100 and the mobile terminal 200 of FIG. 1 according to one or more embodiments. The server 100 or the mobile terminal 200 may include a computing device having wired/wireless communication function. According to one or more embodiments of the disclosure, the server 100 may be a cloud server managed by a subject providing content recommendation service, and the mobile terminal 200 may be a smartphone or a tablet PC owned by the user 1.

Referring to FIG. 2, the server 100 may include a communication interface 110, a processor 120, and a memory 130, and the mobile terminal 200 may include a communication interface 210, a processor 220, a memory 230, and an input/output interface 240. The input/output interface 240 of the mobile terminal 200 may include a camera 241 and a sensor 242. However, the components in the server 100 or the mobile terminal 200 are not limited to the above example, and the server 100 or the mobile terminal 200 may include more or less components than those described above.

According to one or more embodiments of the disclosure, some or all the communication interface 110, the processor 120, and the memory 130 included in the server 100 may be implemented as one chip, the processor 120 may include one or more processors and the memory. Likewise, the communication interface 210, some or all of the processor 220, the memory 230, and the input/output interface 240 included in the mobile terminal 200 may be implemented as one chip, and the processor 220 may include one or more processors.

The configuration of the server 100 is described first. The communication interface 110 may be an element for transmitting/receiving signals (control commands, data, etc.) to/from an external device, and may include a communication chipset supporting various communication protocols. The communication interface 110 may receive a signal from outside and output the signal to the processor 120 that is described later, or may transmit a signal output from the processor 120 to the outside.

The processor 120 may be an element controlling a series of operations allowing the server 100 to operate according to the embodiments of the disclosure, and may include one or more processors. Similarly, the processor 220 may be an element controlling a series of operations allowing the mobile terminal 200 to operate according to the embodiments of the disclosure, and may include one or more processors. Here, the one or more processors may include one or more of a central processing unit (CPU), an application processor (AP), an accelerated processing unit (APU), a many integrated core (MIC), a field-programmable gate array (FPGA), a hardware accelerator, a digital signal processor (DSP), a graphics processing unit (GPU), a vision processing unit (VPU), or dedicated Al processors such as a neural processing unit (NPU) or a machine learning accelerator. For example, when the one or more processors include the Al processors, the Al processor may be designed as a hardware structure specified to process a certain Al model.

The one or more processors may be implemented as one or more multi-core processors that include one or more cores (e.g., homogeneous multi-cores or heterogeneous multi-cores). When a plurality of cores are included in a processor, each of the cores includes a cache memory, and a common cache shared by the cores may be included in the processor. Each of the cores may independently read and execute program instructions or each of the cores may read and execute one or more portions of program instructions.

In embodiments of the disclosure, a processor may refer to a system-on-a-chip (SoC) in which one or more cores and other electronic components are integrated, a single core processor, a multicore processor, or a core included in the single core processor or the multicore processor, wherein the core may be implemented as a CPU, a GPU, an APU, an MIC, an FPGA, a DSP, an NPU, a hardware accelerator, or a machine learning accelerator, but the embodiments of the disclosure are not limited thereto.

The processor 120 may record data on the memory 130 that is described later or read the data stored in the memory 130, and in particular, the processor 120 executes a program stored in the memory 130 to process the data according to operation rules defined in advance or artificial intelligence (AI) model. Therefore, the processor 120 may be configured to perform the operations described in the embodiments of the disclosure, and in the embodiments of the disclosure, operations described to be performed by the server 100 may be performed by the processor 120 unless otherwise defined.

The memory 130 is an element for storing various programs or data, and may include one or more storage mediums such as ROM, RAM, hard disk, CD-ROM, DVD, etc. or a combination of the storage media. The memory 130 may not be separately provided, but may be included in the processor 120. The memory 130 may include a volatile memory, a non-volatile memory, or a combination of a volatile memory and a non-volatile memory. The memory 130 may store a program for performing operations according to the embodiments of the disclosure. The memory 130 may provide stored data to the processor 120 according to a request from the processor 120.

Next, the configuration of the mobile terminal 200 is described below.

From among the elements of the mobile terminal 200, the communication interface 210, the processor 220, and the memory 230 perform substantially the same functions as those of the communication interface 110, the processor 120, and the memory 130 of the server 100, and thus, detailed descriptions thereof are omitted here.

The input/output interface 240 may include an input interface (e.g., touch screen, hard buttons, microphone, etc.) for receiving control commands or information from the user 1, and an output interface (e.g., display panel, speaker, etc.) for displaying execution results of performing operations according to the control from the user 1 or displaying status of the mobile terminal 200.

The input/output interface 240 may further include an element for sensing reaction of the user 1. According to one or more embodiments of the disclosure, the input/output interface 240 may include the camera 241 and the sensor 242, and the mobile terminal 200 may sense the reaction of the user 1 through the above elements. For example, the mobile terminal 200 may capture an image of the user 1 by using the camera 241, and may recognize a direction of user's eyes or facial expression of the user 1 from the captured image. Also, for example, the mobile terminal 200 may sense various body reactions (e.g., change in a pupil size, change in brain waves, change in the heart rate, etc.) of the user 1 by using the sensor 242, and may recognize the change in emotion of the user 1 based on the sensed body reaction.

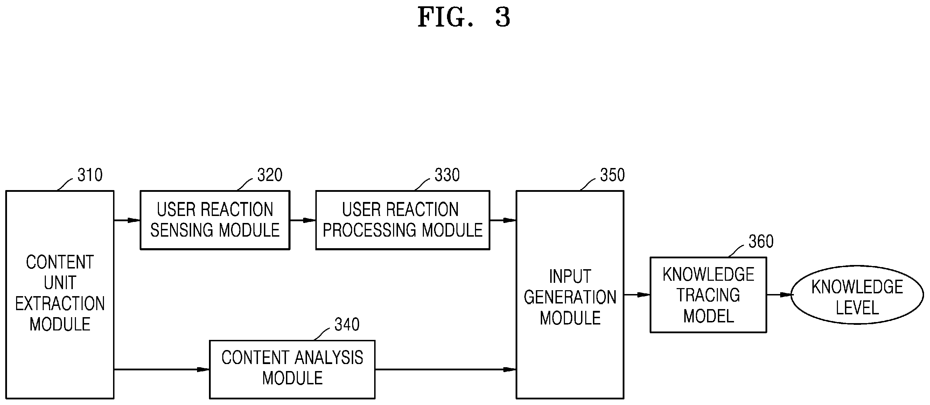

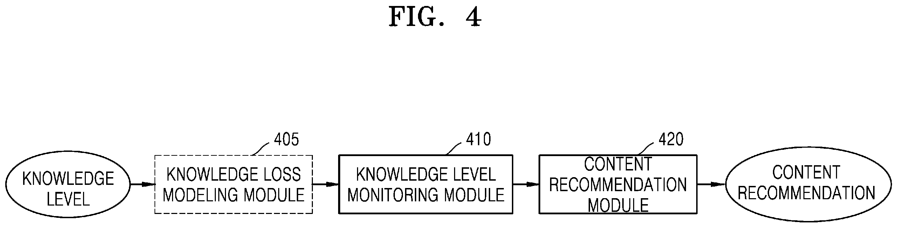

Hereinafter, operations of modules implemented by the server 100 or the mobile terminal 200 according to one or more embodiments of the disclosure are described below with reference to FIGS. 3 and 4. FIG. 3 is a diagram for describing modules used to trace a knowledge level of a user by using a knowledge tracing model, according to one or more embodiments of the disclosure. FIG. 4 is a diagram for describing modules performing an operation of recommending content to a user based on a knowledge level of the user traced by the knowledge tracing model according to one or more embodiments of the disclosure.

According to one or more embodiments of the disclosure, modules shown in FIGS. 3 and 4 are units obtained by dividing operations performed by the processor 120 or 220 of the server 100 or the mobile terminal 200 according to functions or purposes thereof, and may denote software modules. Each of the modules may be configured as independent hardware.

As described above, according to one or more embodiments of the disclosure, it is assumed that most of the operations for knowledge tracing and content recommendation are performed by the server 100, and thus, the operations performed by the modules shown in FIGS. 3 and 4 may be actually performed by the processor 120 of the server 100 unless otherwise described. According to one or more embodiments of the disclosure, some or all of the operations performed by the server 100 may be performed by the mobile terminal 200, and thus, some or all of the operations performed by the modules shown in FIGS. 3 and 4 may be actually performed by the processor 220 of the mobile terminal 200.

Referring to FIG. 3, the modules used to trace the knowledge level of the user may include a content unit extraction module 310, a user reaction sensing module 320, a user reaction processing module 330, a content analysis module 340, an input generation module 350, and a knowledge tracing model 360.

The operations performed by the server 100 via the modules shown in FIG. 3 are described below briefly. When the server 100 determines the understanding the content based on the reaction of the user 1 who consumed the content and inputs the understanding into the knowledge tracing model 360 along with the information about content (e.g., information for identifying content, field of content, level of content, etc.), the knowledge tracing model 360 may output the knowledge level of the user 1.

Hereinafter, the operations performed by the modules shown in FIG. 3 are described in detail below.

The content unit extraction module 310 may divide the content into a plurality of unit contents. According to one or more embodiments of the disclosure, the server 100 determines the understanding of the user for each piece of unit content, and to this end, the content unit extraction module 310 may divide the content into certain units.

The content unit extraction module 310 may divide the content according to various criteria, and some examples of which are described below.

### (1) when the content is text data

The content unit extraction module 310 may divide the content into a plurality of unit contents based on phrases, paragraphs, or chapters. Alternatively, the content unit extraction module 310 may divide the content into a plurality of unit contents based on a theme.

### (2) when content is voice data

The content unit extraction module 310 may divide the content based on magnitude or frequency of the voice. For example, the content unit extraction module 310 may separate the content on the basis of a point where the magnitude or frequency of the voice becomes greater or less than a reference value set in advance.

### (3) when content is image data

The content unit extraction module 310 may separate the content based on a theme of the image (e.g., separate content at the point where the theme is switched), or may separate the content based on an object included in the image (e.g., separate content at the point where a starring person in the image is changed). Alternatively, the content unit extraction module 310 may separate the content based on sound included in the image (e.g., separate content at the point where a volume or frequency of the sound is greater or less than a reference value).

In addition, the content unit extraction module 310 may divide the content based on a delimiter included in the content without regard to the kind of content.

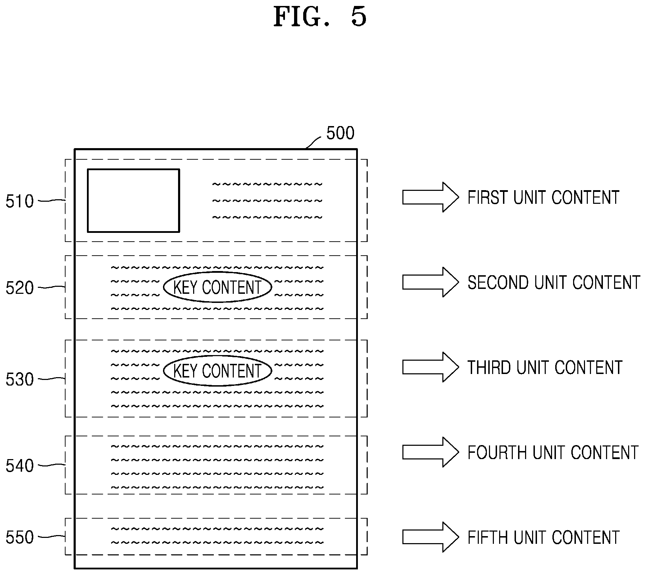

FIG. 5 shows a case in which the content unit extraction module 310 divides the content of text type into a plurality of unit contents according to one or more embodiments of the disclosure. Referring to FIG. 5, one piece of content 500 may be divided into first, second, third, fourth, and fifth content 510, 520, 530, 540, and 550 by the content unit extraction module 310. In the example shown in FIG. 5, the content unit extraction module 310 separates the content 500 based on paragraphs.

According to one or more embodiments of the disclosure, the content unit extraction module 310 may classify the first, second, third, fourth, and fifth unit content 510, 520, 530, 540, and 550 according to a certain criterion. For example, the content unit extraction module 310 may classify the unit content including key content (e.g., unit content including main keyword or main phrases) as important content. As in the example shown in FIG. 5, when the key content is included in the second unit content 520 and the third unit content 530, the content unit extraction module 310 may classify the second unit content 520 and the third unit content 530 as important content. The second and third unit content 520 and 530 classified as important content may be considered prior to the other unit content when determining the understanding about entire content 500, as described later.

Also, according to one or more embodiments of the disclosure, the content unit extraction module 310 may classify, from among the plurality of unit contents 510, 520, 530, 540, and 550, the unit content to which the reaction of the user 1 is sensed as content of interest. For example, when the reaction of the user 1 is sensed while or after the user 1 consumes the first unit content 510, the content unit extraction module 310 may classify the first unit content 510 as content of interest. As described later, the user reaction processing module 330 may determine the understanding based on the sensed reaction with respect to the unit content (content of interest) that the reaction of the user 1 is sensed, and may determine the understanding by using an interpolation or prediction model with respect to the unit content that the reaction of the user 1 is not sensed.

The user reaction sensing module 320 may sense the reaction of the user 1 during or after consuming the content. According to one or more embodiments of the disclosure, the user reaction sensing module 320 may be executed in a mobile terminal 200. In other words, operations described below to be performed by the user reaction sensing module 320 may be actually performed by a processor 220 of the mobile terminal 200.

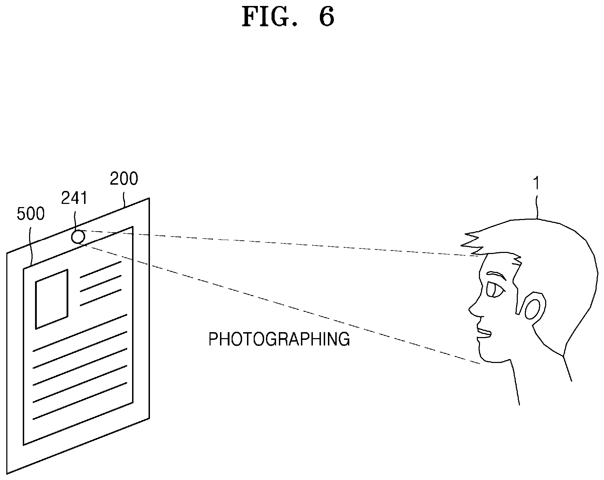

FIG. 6 shows a case in which the mobile terminal 200 senses the reaction of the user 1 who consumes the content 500. According to one or more embodiments of the disclosure, as shown in FIG. 6, the user reaction sensing module 320 may sense the reaction of the user 1 by capturing an image of the user 1 via the camera 241 provided in the mobile terminal 200. For example, the user reaction sensing module 320 may sense the position where the gaze of the user 1 is focused, a speed or pattern of changing the eyes of the user 1 by tracking the eyes of the user 1. Alternatively, the user reaction sensing module 320 may sense a change in the facial expression of the user 1, facial movements (e.g., nodding or tilting the user's head), and other various reactions shown in the face (e.g., expansion of pupils, etc.) of the user 1 by analyzing the image obtained by capturing an image of the face of the user 1.

The user reaction sensing module 320 may sense the reaction of the user 1 through other various methods. According to the one or more embodiments of the disclosure, the user reaction sensing module 320 may sense the reaction of the user 1 through interaction with the user 1 who is consuming the content 500. For example, the user reaction sensing module 320 may sense the speed that the user 1 consumes the content (e.g., text or image flipping seed), the number of times of pausing or going backward during consuming the content, the time taken to consume the content, whether the content is consumed to the end, etc.

According to one or more embodiments of the disclosure, the mobile terminal 200 may sense the reaction of the user 1 through an external device connected to the mobile terminal 200. For example, an external device (e.g., smart watch) capable of measuring heart rate may measure the heart rate of the user 1. Alternatively, for example, an external device (e.g., earphones) capable of measuring brain waves may measure the brain waves of the user 1. In this case, the user reaction sensing module 320 may be executed in one of the mobile terminal 200 or the external device, or in both the devices. The external device may transfer the sensed user reaction to the mobile terminal 200 or directly to the server 100.

The user reaction processing module 330 may determine whether the user 1 understands the content based on the sensed reaction of the user 1. When it is determined that the user 1 understood the content, the user reaction processing module 330 may set the understanding of the user 1 as 'success' (successful), and when it is determined that the user 1 did not understand the content, the user reaction processing module 330 may set the understanding of the user 1 as 'failure' (unsuccessful). That is, the user reaction processing module 330 may indicate the understanding of the user 1 in an integer of 1 (success) or 0 (failure).

Alternatively, according to one or more embodiments of the disclosure, the user reaction processing module 330 may indicate the understanding of the user 1 in a real number (probability value) from 0 to 1. In this case, as the real number indicating the understanding of the user 1 increases, the degree that the user 1 understands the content is high. For example, when the understanding is 0.9, it may be interpreted that the user 1 understood the content nearly completely, and when the understanding is 0.2, it may be interpreted that the user 1 rarely understood the content.

According to one or more embodiments of the disclosure, the user reaction processing module 330 may determine the understanding of the user 1 by comparing the reaction of the user 1 with a preset reference. For example, when the user 1 nods the head while watching the content or when the eyes of the user 1 continuously move without staying in a certain position (in the case of text content), the user reaction processing module 330 may determine the understanding of the user 1 as 'success'. Alternatively, for example, when the user 1 tilts the head while watching the content or frowns at the content, or when the gaze of the user 1 is focused at a certain position for a certain time period or longer or keeps returning backward, the user reaction processing module 330 may determine the understanding of the user 1 as 'failure'. The user reaction processing module 330 may determine the understanding of the user 1 based on the reaction of the user 1 according to various criteria.

According to one or more embodiments of the disclosure, the user reaction processing module 330 may use an artificial neural network in determining the understanding based on the reaction of the user 1. To this end, the user reaction processing module 330 may use a neural network model that is trained (supervised learning) through training data in which the understanding (success or failure) is labeled with respect to a combination of reactions of one or more users 1. Alternatively, the user reaction processing module 330 may use a neural network model that is trained to cluster similar features from among combinations of the reactions of one or more users 1 through unsupervised learning. Here, each classified cluster may correspond respectively to when the user 1 succeeds to understand the content and when the user 1 fails to understand the content. Otherwise, the user reaction processing module 330 may infer the understanding of the user 1 with respect to the content from the reaction of the user 1, by using the neural network models trained by various methods.

When the user reaction processing module 330 inputs the reaction of the user 1 to the trained neural network model, the neural network model infers the understanding of the user 1.

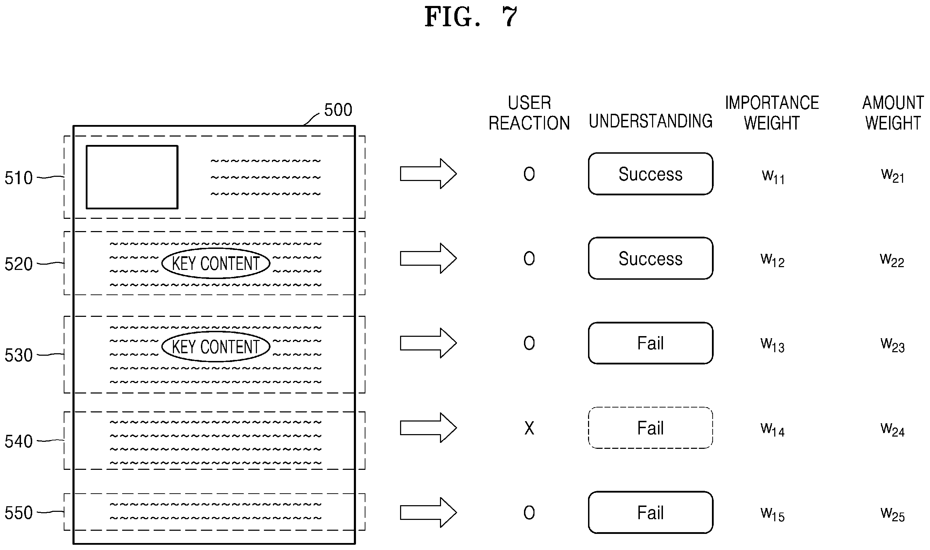

According to one or more embodiments of the disclosure, the user reaction processing module 330 may determine the understanding of the user 1 for each piece of unit content, and may determine the understanding of the entire context of the content, that is, the whole content, based on the understanding of the user 1 with respect to each piece of the unit content. A method of determining the understanding about whole content based on the understanding of the user 1 determined with respect to unit content is described in detail below with reference to FIG. 7.

The content 500 shown in FIG. 7 is divided into the first, second, third, fourth, and fifth unit content 510, 520, 530, 540, and 550 as described above with reference to FIG. 5. When the user reaction sensing module 320 senses the reaction of the user 1 corresponding to each of the first, second, third, fourth, and fifth unit content 510, 520, 530, 540, and 550 and transfers the sensed reaction to the user reaction processing module 330, the user reaction processing module 330 may determine the understanding about the first, second, third, fourth, and fifth unit content 510, 520, 530, 540 and 550 based on the reaction of the user 1 corresponding to each of the first, second, third, fourth, and fifth unit content 510, 520, 530, 540, and 550.

The user reaction processing module 330 may match the reaction of the user 1 sensed while the user 1 consumes certain unit content or within a certain time period after the user 1 consumed certain unit content, as user reaction corresponding to the certain unit content. When there are a plurality of user reactions with respect to certain unit content, the user reaction processing module 330 may match the plurality of user reactions to the certain unit content or match only some of the plurality of user reactions to the certain unit content. According to one or more embodiments of the disclosure, the user reaction processing module 330 may only match predesignated kind of user reaction according to the kind of the unit content. For example, when the unit content is text, the change in the eyes of the user 1 matches to the unit content, and when the unit content is a video, the change in the facial expression and facial movement of the user 1 match to the unit content.

According to one or more embodiments of the disclosure, when the plurality of user reactions correspond to one unit content, the user reaction processing module 330 may determine the understanding of the user 1 taking into account of the plurality of user reactions. For example, the user reaction processing module 330 inputs the plurality of user reactions to the neural network model described above, and may determine the understanding of the user 1 according to the output from the neural network model.

Alternatively, according to one or more embodiments of the disclosure, the user reaction processing module 330 may determine the understanding by separately considering the plurality of user reactions, and after that, the determination results may be combined to determine the understanding of the user 1 with respect to the unit content. For example, the user reaction processing module 330 may calculate an average value of the understanding with respect to each of the plurality of user reactions, and then, may determine the understanding of the user 1 with respect to the unit content based on the calculated average value. For example, when there are three user reactions and the understanding based on each of the user reactions has a value of 1, 0, and 1 respectively, an average 0.67 of the three values is close to 1. Thus, the understanding about the unit content is determined as 'success' (1). Also, the user reaction processing module 330 may apply a weight that is directly set by the user 1 or a weight set through the training the neural network model to each kind of the user reactions. The user reaction processing module 330 may calculate a weighted sum or a weighted mean of the understanding with respect to each of the plurality of user reactions by applying the weight to each kind of user reactions, and then, may determine the understanding of the user 1 with respect to the unit content based on the calculated value.

With respect to some unit content, corresponding user reactions may not be sensed. For example, when the user 1 does not show a particular reaction while consuming the certain unit content or when the reaction of the user 1 is too weak to be sensed by the sensor, etc., the user reaction processing module 330 may determine that there is no user reaction corresponding to the certain unit content.

With respect to the unit content having no corresponding user reaction, the user reaction processing module 330 may predict the understanding through an interpolation method or a method of using a prediction model. For example, when there is not user reaction corresponding to the certain unit content, the user reaction processing module 330 may predict the understanding about the certain unit content based on the understanding of the user 1 with respect to unit content before and after the certain unit content.

Referring to FIG. 7, there are user reactions corresponding to the first, second, and third unit content 510, 520, 530 and the fifth unit content 550, but there is no user reaction corresponding to the fourth unit content 540. With respect to the first, second, and third unit content 510, 520, and 530 and the fifth unit content 550, the user reaction processing module 330 may determine the understanding based on the corresponding user reactions.

However, there are no corresponding user reaction with respect to the fourth unit content 540, the user reaction processing module 330 has to predict the understanding of the user 1 with respect to the fourth unit content 540. According to one or more embodiments of the disclosure, the user reaction processing module 330 may predict the understanding of the user 1 with respect to the fourth unit content 540, based on the understanding of the user 1 with respect to the third unit content 530 and the fifth unit content 550 that are adjacent to the fourth unit content 540. In the embodiment of the disclosure shown in FIG. 7, the understanding of the user with respect to the third unit content 530 and the understanding of the user 1 with respect to the fifth unit content 550 are both 'failure', and thus, the user reaction processing module 330 may predict the understanding of the user 1 with respect to the fourth unit content 540 between the third and fifth unit content as 'failure'. A different result may be obtained of course, when the user reaction processing module 330 predicts the understanding of the user 1 with respect to the fourth unit content 540 according to another criterion or method.

The user reaction processing module 330 may determine the understanding with respect to the whole content 500 based on the understanding with reference to the unit content 510, 520, 530, 540, and 550. That is, the user reaction processing module 330 may determine whether the user 1 understands the entire context of the content or only understands some of the content, by connecting the understanding with respect to the unit content.

According to one or more embodiments of the disclosure, the user reaction processing module 330 may determine the understanding with respect to the whole content 500 based on a result of comparing the number of unit contents in which the understanding is determined as 'success' with the number of unit contents in which the understanding is determined as 'failure'. According to one or more embodiments of the disclosure, the user reaction processing module 330 may determine the understanding with respect to the whole content 500 as 'success' when the number of unit contents of which the understanding is determined as 'success' is equal to or greater than a certain ratio of the total number of unit contents. For example, in the example shown in FIG. 7, the number of unit contents of which the understanding is determined as 'success' is two (510, 520) and the number of unit contents of which the understanding is determined as 'failure' is three (530, 540, 550). When it is assumed that understanding with respect to 60% of content or greater has to be 'success' in order to determine the understanding with respect to the whole content 500 as 'success', the above condition is not satisfied, and thus, the user reaction processing module 330 may determine that the understanding of the whole content 500 as 'failure'.

Alternatively, according to one or more embodiments of the disclosure, the user reaction processing module 330 may determine the understanding with respect to the whole content 500 by comparing the number of unit contents in which the understanding is determined as 'success' with the number of unit contents in which the understanding is determined as 'failure' and applying a weight varying depending on the unit content. Because, when the user 1 determines that he/she understands the whole content mainly, the user 1 may not carefully read or skip less important paragraphs.

The weight applied to the content may be determined according to importance or quantity of the content, and two or more kinds of weights may be applied for each unit content. For example, the user reaction processing module 330 may give a high weight to unit content including key content related to a subject of the content and may give a high weight as the amount of unit content increases. Also, the user reaction processing module 330 may give higher weight (interest weight) to the unit content in which the user 1 is more interested. To this end, the user reaction processing module 330 may identify a degree of interest of the user 1 for the unit content based on the reaction of the user 1 sensed while the user 1 consumes the content. For example, when the user 1 skips fast some of unit content and then carefully reads certain unit content while reading a text, the user reaction processing module 330 may determine the user 1 is highly interested in the certain unit content.

The user reaction processing module 330 may determine the understanding with respect to the whole content by multiplying the weights applied to each unit content to a value (e.g., '1' (success) and '0' (failure)) indicating the understanding and adding, and comparing the result with a preset reference value.

For example, in the embodiment of FIG. 7, the user reaction processing module 330 may assign higher importance weights w₁₂ and w₁₃ to the second unit content 520 and the third unit content 530 including the key content as compared with the other unit content 510, 540, and 550. Also, a weight w₂₃ assigned to the third unit content 530 may be greater than a weight w₂₅ assigned to the fifth unit content 550. The user reaction processing module 330 multiplies the weights w₁₁ and w₂₁ assigned to the first unit content 510, of which the understanding is 'success', by 1 and adds the weights, and likewise, multiplies the weights w₁₂ and w₂₂ assigned to the second unit content 520, of which the understanding is 'success', by 1 and adds the weights. After that, when the result value (w₁₁+w₂₁+w₁₂+w₂₂) is greater than a preset reference value, the user reaction processing module 330 determines the understanding with respect to the whole content 500 as 'success', and when the result value is equal to or less than the preset reference value, the user reaction processing module 330 may determine the understanding with respect to the whole content 500 as 'failure'. As described above, the understanding of the user 1 may be expressed as a real number value between 0 to 1, not in the value of 0 or 1, and in this case, the user reaction processing module 330 multiplies the real number between 0 to 1 indicating the understanding by the weights and adds the results, and compares the result with a preset reference value to determine the understanding with respect to the whole content 500.

The content analysis module 340 obtains information about the content and may generate embedding vector corresponding to the content by using the information about the content. According to one or more embodiments of the disclosure, the content analysis module 340 may determine the field and the level of the content by analyzing the content, and may generate and output the embedding vector including the information about the content (information for identifying the content, the field of the content, the level of the content, etc.). Here, the information for identifying the content may include an index value corresponding to the content or one or more phrases included in the content.

The content analysis module 340 may convert the information about the content into the embedding vector by using a language model. The content analysis module 340 may generate the embedding vector corresponding to each unit content, or may generate the embedding vector corresponding to the whole content.

According to one or more embodiments of the disclosure, the content analysis module 340 analyzes the content and may determine the field or the level of the content based on the analysis result. Alternatively, according to one or more embodiments of the disclosure, the content analysis module 340 may obtain information about the field or level of the content without analyzing the content. (for example, information about the field and level of the content is stored in metadata of the content in advance)

A method of determining the level of content, by the content analysis module 340, is described in detail below.

The content analysis module 340 may determine 'level of each field' and 'language level' of the content. The level by field of the content denotes a difficulty in consideration of the field to which the content belongs to, and the language level of the content may denote a difficulty in vocabularies or phrases included in the content regardless of the field.

The content analysis module 340 may determine the level by field of the content based on the difficulty and the number of the technical terms included in the content. Also, the content analysis module 340 may determine the level by field of the content based on how deep is the detailed field that the content deals with in a certain field. The content analysis module 340 may determine the language level of the content based on the difficulty of general terms (not the technical terms) included in the content, the number of words included in each sentence, the length of sentence, etc.

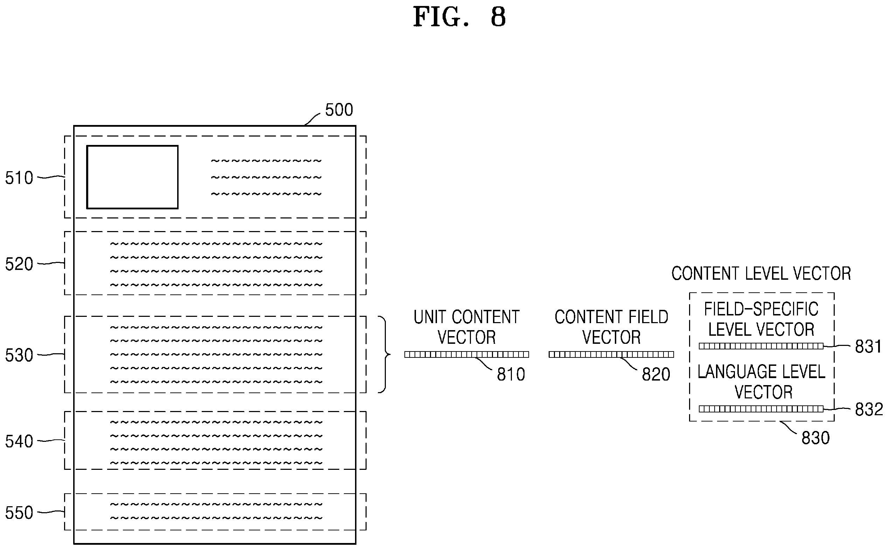

When the content analysis module 340 obtains information about the content, the content analysis module 340 may generate embedding vector corresponding to the content by using the information about the content. FIG. 8 shows an example in which the content analysis module 340 generates an embedding vector corresponding to the third unit content 530. Referring to FIG. 8, the content analysis module 340 may generate a unit content vector 810, a content field vector 820, and a content level vector 830 corresponding to the third unit content 530, and the content level vector 830 may include a field-specific level vector 831 and a language level vector 832.

The unit content vector 810 denotes an embedding vector corresponding to information for identifying the third unit content 530. According to one or more embodiments of the disclosure, the content analysis module 340 may generate the unit content vector 810 by converting some or all of the phrases included in the third unit content 530 into embedding vectors.

The content field vector 820 denotes an embedding vector indicating the field of the third unit content 530. According to one or more embodiments of the disclosure, the content analysis module 340 may generate the content field vector 820 by converting the text indicating the field of the third unit content 530 into an embedding vector.

The content level vector 830 denotes an embedding vector indicating the level of the third unit content 530 and may include the field-specific level vector 831 and the language level vector 832. According to one or more embodiments of the disclosure, the content analysis module 340 may generate the field-specific level vector 831 or the language level vector 832 by converting to the embedding vector the element indicating the field-specific level or the language level of the third unit content 530 (e.g., the number and difficulty of the technical terms of the field included in the content, the degree indicating how deep is the specific field that the content deals with, the difficulty of general terms included in the content, the number of phrases included in the content, etc.).

FIG. 8 shows only a case in which the embedding vector corresponding to the third unit content 530 is generated, but the content analysis module 340 may generate the embedding vector corresponding to each of the unit contents 510, 520, 530, 540, and 550, or may generate the embedding vector corresponding to the whole content 500.

The content analysis module 340 may transfer the generated embedding vectors 810, 820, 831, and 832 to the input generation module 350.

The input generation module 350 may generate an input to the knowledge tracing model 360 by using the understanding with respect to the content received from the user reaction processing module 330 and the information about the content (embedding vectors corresponding to the content) received from the content analysis module 340.

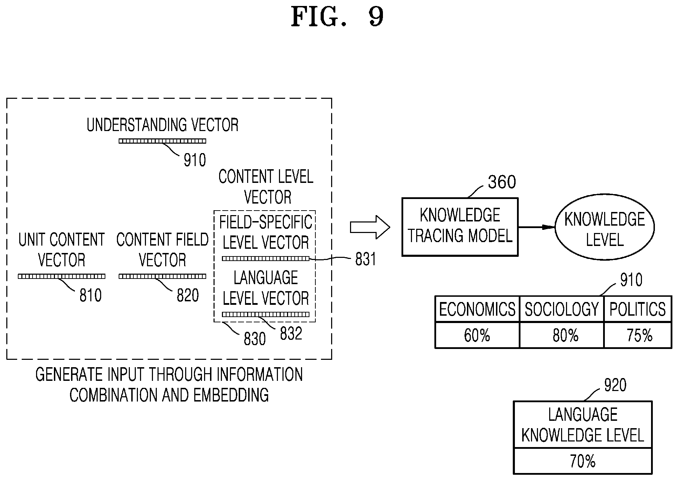

FIG. 9 is a diagram for describing processes in which, when the input generated by the input generation module 350 is applied to the knowledge tracing model 360, the knowledge tracing model 360 determines and updates the knowledge level of the user 1. In the embodiment of the disclosure in FIG. 9, it is assumed that the input generation module 350 generates an input to the knowledge tracing model 360 by using the embedding vectors 810, 820, 831, and 832 corresponding to the third unit content 530, generated in FIG. 8 above.

Referring to FIG. 9, the input generation module 350 may generate the input to the knowledge tracing model 360 by combining at least one of the embedding vectors 810, 820, 831, and 832 corresponding to the third unit content 530 received from the content analysis module 340 with an understanding vector 910 received from the user reaction processing module 330. Here, the understanding vector 910 may indicate the understanding of the user ('failure' - see FIG. 7) with respect to the third unit content 530.

According to one or more embodiments of the disclosure, the input generation module 350 may generate a new embedding vector by combining at least one of the embedding vectors 810, 820, 831, and 832 corresponding to the third unit content 530 with the understanding vector 910 corresponding to the third unit content 530 (e.g., generate one-hot vector by performing a one-hot encoding on the generated combination). The embedding vector generated above may be input to the knowledge tracing model 360. For example, the input generation module 350 may combine the content field vector 820 with the understanding vector 910 and convert into the embedding vector, and may input the embedding vector to the knowledge tracing model 360. Alternatively, for example, the input generation module 350 may combine all the unit content vector 810, the content field vector 820, the content level vector 830, and the understanding vector 910 and convert into the embedding vector, and input the embedding vector to the knowledge tracing model 360.

As described above, the embedding vector that is input to the knowledge tracing model 360 may include information about the content consumed by the user 1 (information for identifying the content, the field of the content, the level of the content, etc.) and information about the understanding of the user.

When the user 1 consumes the whole content 500, the input generation module 350 generates the embedding vector in the same manner with respect to all of unit contents 510, 520, 530, 540, and 550 included in the whole content 500, and thus generate the input to the knowledge tracing model 360.

The knowledge tracing model 360 is a neural network model for tracing the knowledge level of the user 1 based on the result of consuming the content by the user 1. According to one or more embodiments of the disclosure, the knowledge tracing model 360 may be implemented as a recurrent neural network (RNN) or a long short-term memory (LSTM) that is suitable for processing time-serial data, and in particular, may be implemented as a transformer. The knowledge tracing model 360 may be implemented in other various kinds of neural networks.

According to one or more embodiments of the disclosure, the knowledge level of the user 1 inferred by the knowledge tracing model 360 may include the field-specific knowledge level 910 and the language knowledge level 920 as shown in FIG. 9. The field-specific knowledge level 910 denotes a probability that the user 1 understands the content of each field. According to the field-specific knowledge level 910 shown in FIG. 9, the probability that the user 1 understands the content of economic field is 60%, the probability that the user 1 understands the content of social field is 80%, and the probability that the user 1 understands the content of politics field is 75%. The language knowledge level 920 denotes overall capability of the user 1 in vocabularies or reading, without regard to the field. FIG. 9 shows the field-specific knowledge level 910 and the language knowledge level 920 in percentage, but the field-specific knowledge level 910 and the language knowledge level 920 may be expressed in various manners. (For example, the level may be expressed in a real number between 0 to 1.)

The knowledge tracing model 360 may receive an input of information about the activity of the user 1 with respect to the content and may infer the knowledge level of the user 1. Here, the information about the activity of the user may include information about which content is consumed by the user, information about whether the user 1 understands the content, etc. In other words, the knowledge tracing model 360 may continuously update the knowledge level of the user 1 based on the result of consuming the content by the user 1.

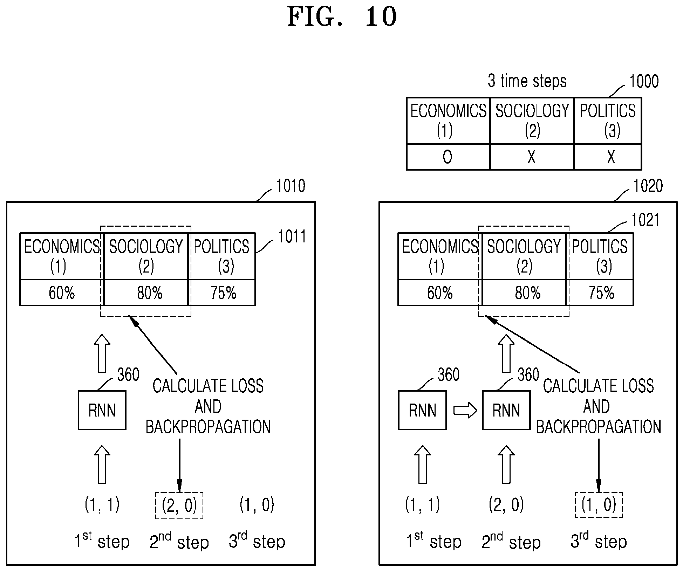

Hereinafter, referring to FIG. 10, processes in which the knowledge tracing model 360 is trained based on a result of consuming a plurality of content sequentially by the user 1.

FIG. 10 shows the processes in which the knowledge tracing model 360 is trained based on the result of consuming three pieces of content sequentially by the user 1.

FIG. 10 shows a table 100 indicating a result of consuming three pieces of content sequentially by the user 1 at the right upper end. Referring to the table 1000, the user 1 firstly consumed content in the economics field and understood the content, consumed content in the social field and failed to understand the content, and then, consumed content in the economics field and failed to understand the content. In FIG. 10, index corresponding to each field is set for convenience of description. (economics:1, sociology: 2, politics:3) Also, when the user succeeds to understand the content, it is indicated by '1', and when the user fails to understand the content, it is indicated by '0'. When the result of consuming the content is expressed in a combination of (field, understanding), the content consuming result shown in the table 100 may be expressed as follows.
First content consuming (first step): (1, 1)
Second content consuming (second step): (2, 0)
Third content consuming (third step): (1, 0)

The above information may be expressed in the content field vector and the understanding vector as described above.

The input generation module 350 may convert the information into the embedding vector and input the embedding vector into the knowledge tracing model 360, and the knowledge tracing model 360 may be implemented as the RNN as shown in FIG. 10.

FIG. 10 shows a first step 1010 and a second step 1020 according to an order of training the knowledge tracing model 360.

First, the knowledge tracing model 360 may receive an input of a result of consuming one piece of content (e.g., field of content, understanding of content, etc.), and may infer the knowledge level of the user 1. In first step 1010 of FIG. 10, when the input generation module 350 inputs the embedding vector corresponding to (1, 1), that is, the result of first content consuming, into the knowledge tracing model 360, the knowledge tracing model 360 may output a first field-specific knowledge level 1011.

According to one or more embodiments of the disclosure, when training the knowledge tracing model 360, the training may be performed only considering the content in the following order. For example, the knowledge tracing model 360 may be trained by comparing the predicted understanding (the probability that the user would understand the next content, and is determined based on knowledge level) and the actual understanding (label) of the user 1 with respect to the content in the next order. In other words, the predicted understanding with respect to the next content is compared with the actual understanding of the user 1 with respect to the next content, and the parameter of the knowledge tracing model 360 may be adjusted so that the difference may be reduced.

According to one or more embodiments of the disclosure, the knowledge tracing model 360 may adjust the parameter thereof so that a loss may be minimum by calculating the loss between the predicted understanding with respect to the next content and the actual understanding of the user 1 with respect to the next content and performing backpropagation. To this end, a loss function that outputs a less value as the predicted understanding with respect to the next content and the actual understanding of the user 1 with respect to the next content are close to each other.

In summary, the knowledge tracing model 360 predicts an expected understanding with respect to the next content based on the knowledge level inferred previously, and may update the parameters of the knowledge tracing model 360 so that the loss between the predicted understanding and the actual understanding of the user 1 with respect to the next content.

In first step 1010 of FIG. 10, the next content (second content) is the content in the social field, the knowledge tracing model 360 may predict the understanding with respect to the next content to be 80% with reference to the first field-specific knowledge level 1011. The knowledge tracing model 360 may update the parameters thereof so that the loss may be minimum, by calculating the loss between the understanding (80%) with respect to the next content and the actual understanding with respect to the next content (failure, '0') and performing backpropagation.

In first step 1010, when the first field-specific knowledge level 1011 is updated through the learning in consideration of the second content, second step 1020 is performed. In second step 1020, the knowledge tracing model 360 may be trained in consideration of next content (third content) like in first step 1010. In second step 1020, because the next content (third content) is content in the economics field, the knowledge tracing model 360 may predict the understanding with respect to the next content to be 60% in consideration of second field-specific knowledge level 1021. The knowledge tracing model 360 may update the parameters thereof so that the loss may be minimum, by calculating the loss between the understanding (60%) with respect to the next content and the actual understanding with respect to the next content (failure, '0') and performing backpropagation.

According to the above-described method, the learning is performed by using the result of consuming successive content to update the parameters of the knowledge tracing model 360. Therefore, according to one or more embodiments of the disclosure, the user does not need to perform an additional operation (e.g., problem solving or answering to survey, etc.) for tracing the knowledge level, that is, when the user 1 consumes content and shows a reaction, the knowledge level of the user 1 may be traced.

So far, the processes of tracing the knowledge level of the user 1 by using the modules shown in FIG. 3 are described. Hereinafter, referring to FIG. 4, processes of recommending content to the user 1 based on the result of tracing the knowledge level of the user 1 are described below in detail.

Referring to FIG. 4, modules used to recommend content may include a knowledge level monitoring module 410 and a content recommendation module 420, and may further include a knowledge loss modeling module 405. According to one or more embodiments of the disclosure, the knowledge loss modeling module 405 may be included in the knowledge tracing model 360 of FIG. 3. In this case, the knowledge level of FIG. 4 may be a result of applying the knowledge loss modeling.

The knowledge loss modeling module 405 may adjust the knowledge level of the user 1 by reflecting a phenomenon that the knowledge level of the user 1 is declined over time. Because memory of a human being diminishes over time, the knowledge level of the user 1 may be declined over time. Therefore, according to one or more embodiments of the disclosure, the knowledge loss modeling module 405 may adjust the knowledge level to be lowered over time after the knowledge tracing model 360 infers the knowledge level of the user 1.

The knowledge loss modeling module 405 may adjust the knowledge level over time by using a linear model or non-linear model. According to one or more embodiments of the disclosure, the knowledge loss modeling module 405 may adjust the knowledge level by using a non-linear model, so that the declining speed of the knowledge level is high soon after the inference of the knowledge level and then is reduced gradually over time.

The knowledge level monitoring module 410 may monitor the knowledge level of the user 1, which is updated by the knowledge tracing model 360, in order to recommend content to the user 1. According to one or more embodiments of the disclosure, the knowledge level monitoring module 410 may identify at least one of the field-specific knowledge level or the language knowledge level of the user 1 inferred by the knowledge tracing model 360, and then transfers the identified knowledge level to the content recommendation module 420.

The content recommendation module 420 may recommend content to the user 1 in consideration of the user's interest and knowledge level. The content recommendation module 420 may recommend content to the user 1 considering only one of the interest of the user 1 and the knowledge level of the user 1, and in the disclosure, an example in which the content is recommended in consideration of both the interest and the knowledge level of the user 1 is described below.

The content recommendation module 420 may identify the interest of the user 1 through various ways. According to one or more embodiments of the disclosure, the content recommendation module 420 may identify the interest of the user 1 based on a field of interest input directly by the user 1, or may identify the interest of the user 1 based on content consuming history of the user 1. According to one or more embodiments of the disclosure, the content recommendation module 420 identifies which field of content the user 1 is interested in, and selects at least one piece of content in the corresponding field in consideration of the knowledge level of the user 1 and then recommend the content to the user 1. A method of selecting the content in consideration of the knowledge level of the user 1 is described later.

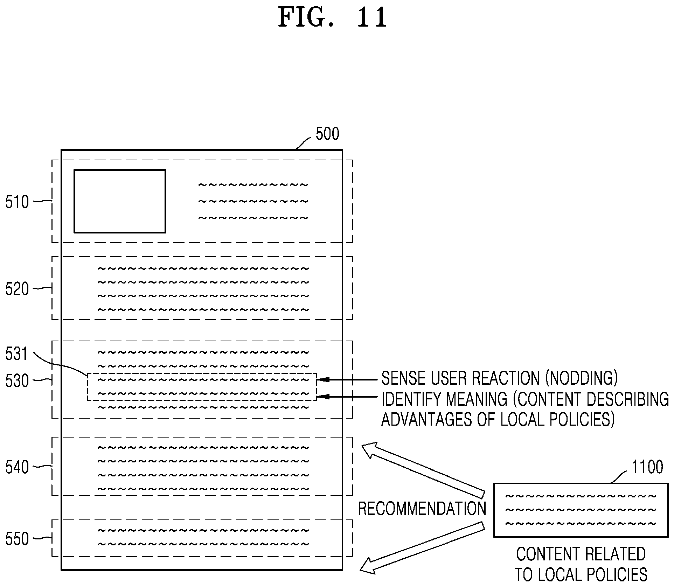

According to one or more embodiments of the disclosure, the content recommendation module 420 may identify the interest of the user 1 based on the reaction of the user 1 while consuming the content, and this is described in more detail with reference to FIG. 11 later.

According to one or more embodiments of the disclosure, the content recommendation module 420 may identify the user's interest by analyzing the context of the part where the user 1 shows reaction in the content. As shown in FIG. 11, when the reaction of the user 1 is sensed in a region 531 in the third unit content 530, the content analysis module 340 may analyze the context of the region 531.

According to one or more embodiments of the disclosure, the content recommendation module 420 may determine whether the user 1 shows empathy to the region 531 based on the reaction of the user 1 to the region 531, and when the user 1 shows empathy, the content recommendation module 420 may determine that the user 1 is interested in the subject of the region 531. For example, as shown in the embodiment of the disclosure in FIG. 11, when the reaction of the user 1, e.g., nodding the user's head, in the region 531 is sensed (determined to show empathy) and the context of the region 531 is analyzed to describe 'advantages of local policies', the content recommendation module 420 may determine that the user 1 is interested in the local policies.

The content recommendation module 420 may recommend content to the user 1 based on the user's interest and the knowledge level of the user 1 identified by the above method. According to one or more embodiments of the disclosure, the content recommendation module 420 may recommend content of an appropriate difficulty based on the knowledge level of the user 1 or may recommend content that is expected to improve the knowledge level of the user 1. For example, the content recommendation module 420 may infer the content that is highly possible to improve the knowledge level of the user 1 and recommend the content to the user 1, through an optimizing process using a reinforced learning by using a Markov decision process (MDP).

In the embodiment of the disclosure in FIG. 11, the content recommendation module 420 determines that the user 1 is interested in the local policies, and thus, may recommend new content 1100 related to the local policies to the user 1. Here, the content recommendation module 420 may select at least one piece from among a plurality of content related to the local policies, based on the knowledge level of the user 1. When recommending the selected content 1100 to the user 1, the content recommendation module 420 may recommend the new content 1100 immediately after the third unit content 530 used to identify the interest of the user 1, or may recommend the new content 1100 after the user 1 consumes the whole content 500.

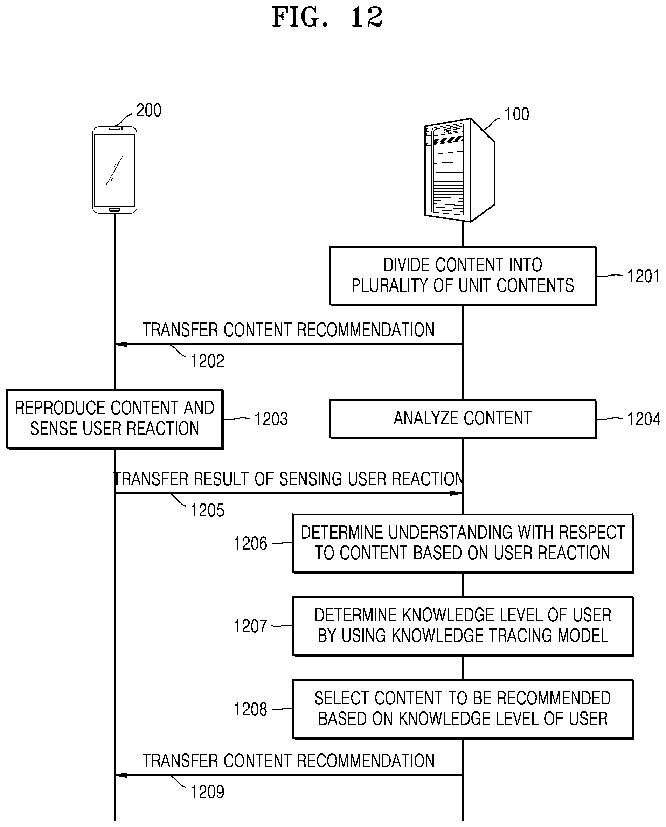

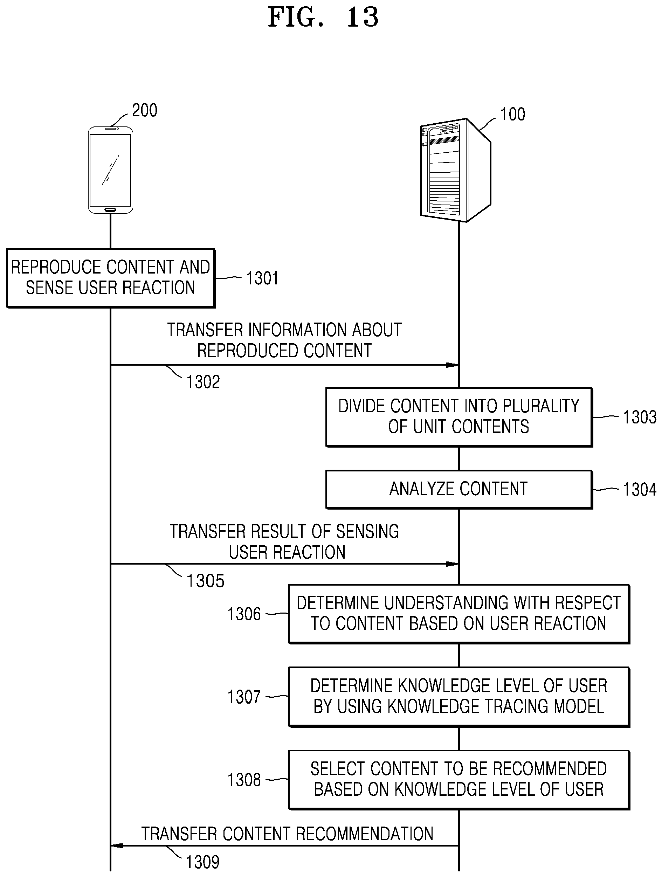

FIGS. 12 and 13 are diagrams for describing processes in which the server 100 and the mobile terminal 200 trace a knowledge level of the user who consumed content and then recommend content to the user based on a result of tracing, according to one or more embodiments of the disclosure. Even when omitted below, the characteristics of the components described with reference to FIGS. 3 and 4 may be equally applied to one or more embodiments of the disclosure provided below.

Referring to FIG. 12, the server 100 divides certain content into a plurality of unit contents in operation 1201, and may transfer recommendation of the corresponding content to the mobile terminal 200 in operation 1202.

When the content recommendation is displayed on a screen of the mobile terminal 200 and a user selects the corresponding content, the mobile terminal 200 reproduces the content and may sense the reaction of the user while the user consumes the content in operation 1203. The mobile terminal 200 may sense the reaction of the user by using various devices or sensors, and may sense the reaction of the user by using an external device.

In operation 1204, the server 100 may obtain information about the content (information for identifying content, field of content, level of content, etc.) by analyzing the recommended content.

In operation 1205, the mobile terminal 200 transfers a result of sensing the user reaction to the server 100, and then, the server 100 may determine the understanding with respect to the content based on the user reaction in operation 1206. The method of determining the understanding with respect to the content based on the user reaction, in the server 100, may be implemented variously as described above.

In operation 1207, the server 100 may determine (update) the knowledge level of the user by using a knowledge tracing model. According to one or more embodiments of the disclosure, the server 100 generates an embedding vector corresponding to a combination including the information about content and the understanding of the user, and inputs the embedding vector into the knowledge tracing model. Then, the knowledge level of the user inferred by the knowledge tracing model may be obtained. The server 100 may continuously update the knowledge level of the user as the user consumes the content.

In operation 1208, the server 100 may select content to be recommended based on the knowledge level of the user. According to one or more embodiments of the disclosure, the server 100 primarily filter the content based on the user's interest, and may select at least one piece of content from among the filtered content based on the knowledge level of the user. According to one or more embodiments of the disclosure, the server 100 may recommend the content having a difficulty suitable for the knowledge level of the user, or may recommend the content that is expected to maintain or improve the knowledge level of the user.

In operation 1209, the server 100 may transfer recommendation of the selected content to the mobile terminal 200.

When comparing the embodiment of FIG. 13 with the embodiment of FIG. 12, operation 1301 to operation 1304 are only different from FIG. 12, and processes thereafter are the same as those of FIG. 12. Therefore, differences from FIG. 12 are only described below.

The process begins with the content recommendation of the server 100 in the embodiment of FIG. 12, but in the embodiment of FIG. 13, processes begin with a user of the mobile terminal 200 directly selecting content to be consumed and reproducing the content.

When the user directly selects the content and inputs a reproduction command in the mobile terminal 200, the mobile terminal 200 reproduces the content and may sense the user reaction while the user consumed the content in operation 1301. The mobile terminal 200 may sense the reaction of the user by using various devices or sensors, and may sense the reaction of the user by using an external device.

In operation 1302, the mobile terminal 200 may transfer information about the content reproduced by the selection of the user, that is, the content consumed by the user, to the server 100.

In operation 1303, the server 100 divides the content reproduced on the mobile terminal 200 into a plurality of unit contents, and in operation 1304, the server 100 analyzes the content reproduced on the mobile terminal 200 to obtain the information about the content (information for identifying content, field of content, level of content, etc.).

Operation 1305 to operation 1309 are substantially the same as operation 1205 to operation 1209 of FIG. 12, and detailed descriptions are omitted.

As described above, because some or all of the operations performed by the server 100 may be also performed by the mobile terminal 200, operation 1201, operation 1204, and operation 1206 to operation 1208 of FIG. 12 may be at least partially performed by the mobile terminal 200.

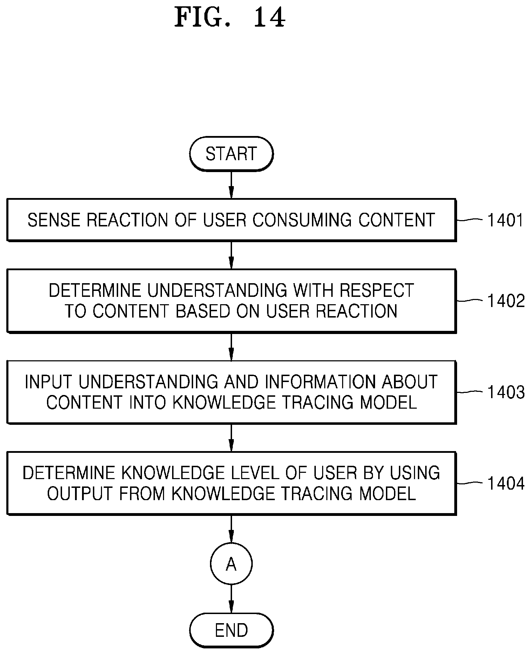

FIGS. 14 to 19 are flowcharts for describing a method of tracing a knowledge level of a user who consumed content and recommending content based on the knowledge level of the user, according to one or more embodiments of the disclosure. Processes described below are performed by the server 100 or the mobile terminal 200, and thus, the descriptions provided in the above embodiments of the disclosure may be also equally applied even when being omitted.

In operation 1401, when the user consumes content on the mobile terminal 200 may sense reaction of the user consuming the content. According to one or more embodiments of the disclosure, the mobile terminal 200 may sense the user reaction by capturing an image of the user via a camera 241 provided thereon. For example, the mobile terminal 200 may sense the position where the gaze of the user is focused and the speed or pattern of changes in the eyes of the user by tracking the eyes of the user. Alternatively, the mobile terminal 200 may sense a change in the facial expression of the user, facial movements (e.g., nodding or tilting the user's head), and other various reactions shown in the face (e.g., expansion of pupils, etc.) of the user by analyzing the image obtained by capturing an image of the face of the user.

The mobile terminal 200 may sense the user reaction by using other various methods. According to one or more embodiments of the disclosure, the mobile terminal 200 may sense the user reaction through interaction with the user consuming the content. For example, the mobile terminal 200 may sense the speed of the user flipping through the text or video, the number of times that the user stops or goes backward during watching the text or video, the time taken to consume the content, whether the user stops watching the content, etc.

According to one or more embodiments of the disclosure, the mobile terminal 200 may sense the user reaction through the external device. For example, when the external device is a smart watch, the smart watch may measure the heart rate of the user. Alternatively, for example, when the external device is earphones, the earphones may measure the brain waves of the user. The external device may transfer the selected user reaction to the mobile terminal 200 or directly to the server 100.

When the mobile terminal 200 transfers information about the user reaction sensed in operation 1401 to the server 100, the server 100 may determine the understanding with respect to the content based on the user reaction in operation 1402. When it is determined that the user understands the content, the server 100 sets the understanding of the user as 'success', and when it is determined that the user does not understand the content, the server 100 may set the understanding of the user as 'failure'. Alternatively, the server 100 may express the understanding of the user 1 in a real number (probability value) from 0 to 1. In this case, as the real number indicating the understanding of the user 1 increases, the degree that the user 1 understands the content is high. For example, when the understanding is 0.9, it may be interpreted that the user 1 understood the content nearly completely, and when the understanding is 0.2, it may be interpreted that the user 1 rarely understood the content.

According to one or more embodiments of the disclosure, the server 100 may determine the understanding of the user by comparing the reaction of the user with a preset reference. For example, when the user nods the head while watching the content or when the eyes of the user continuously move without staying in a certain position (in the case of text content), the server 100 may determine the understanding of the user as 'success'. Alternatively, for example, when the user tilts the head while watching the content or frowns at the content, or when the gaze of the user is focused at a certain position for a certain time period or longer or keeps returning backward, the server 100 may determine the understanding of the user as 'failure'. Otherwise, the server 100 may determine the understanding of the user based on the user reaction according to various criteria.

According to one or more embodiments of the disclosure, the server 100 may use an artificial neural network in determining the understanding based on the reaction of the user. To this end, the server 100 may use a neural network model that is trained through training data in which the understanding (success or failure) with respect to various user reactions is labeled. Alternatively, the server 100 may use a neural network model that is trained to cluster similar features from among combinations of the reactions of one or more users through unsupervised learning. Here, each classified cluster may correspond respectively to when the user succeeds to understand the content and when the user fails to understand the content. Otherwise, the server 100 may infer the understanding of the user with respect to the content from the user reaction by using the neural network model trained in various ways. When the server 100 inputs the sensed user reaction to the neural network model trained as above, the neural network model may infer the understanding of the user.

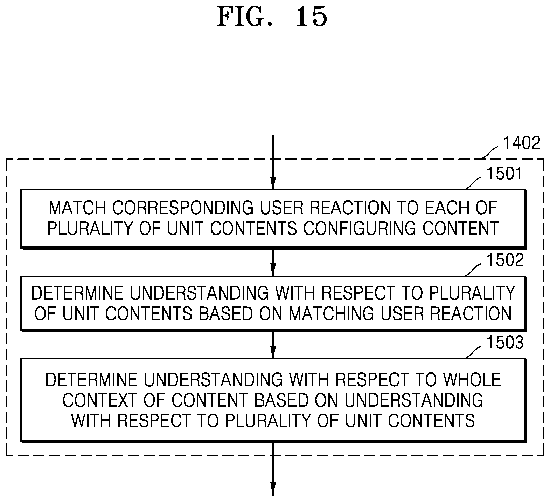

According to one or more embodiments of the disclosure, the server 100 may determine the understanding of the user for each piece of unit content, and may determine the understanding of the entire context of the content, that is, the whole content, based on the understanding of the user with respect to each piece of the unit content. FIG. 15 shows the detailed processes performed by the server 100 in order to determine the understanding with respect to the whole content based on the understanding of the user with respect to each unit content.

Referring to FIG. 15, in operation 1501, the server 100 may match the user reaction to each of the plurality of the unit contents included in the content.

According to one or more embodiments of the disclosure, the server 100 may match the reaction of the user sensed while the user consumes certain unit content or within a certain time period after the user consumed certain unit content, as user reaction corresponding to the certain unit content. When there are a plurality of user reactions with respect to certain unit content, the server 100 may match the plurality of user reactions to the certain unit content or match only some of the plurality of user reactions to the certain unit content. According to one or more embodiments of the disclosure, the server 100 may only match predesignated kind of user reaction according to the kind of the unit content.

In operation 1502, the server 100 may determine the understanding with respect to the plurality of unit contents based on the matching user reaction. According to one or more embodiments of the disclosure, when the plurality of user reactions correspond to one unit content, the server 100 may determine the understanding of the user taking into account of the plurality of user reactions. For example, the server 100 inputs the plurality of user reactions to the neural network model described above, and may determine the understanding of the user according to the output from the neural network model.

Alternatively, according to one or more embodiments of the disclosure, the server 100 may determine the understanding by separately considering the plurality of user reactions, and after that, the determination results may be combined to determine the understanding of the user with respect to the unit content. For example, the server 100 may calculate an average value of the understanding with respect to each of the plurality of user reactions, and then, may determine the understanding of the user with respect to the unit content based on the calculated average value.

With respect to some unit content, corresponding user reactions may not be sensed. For example, when the user does not show a particular reaction while consuming the certain unit content or when the reaction of the user is too weak to be sensed by the sensor, etc., the server 100 may determine that there is no user reaction corresponding to the certain unit content.

With respect to the unit content having no user reaction corresponding thereto, the server 100 may predict the understanding by using the interpolation method or the method of using prediction model. For example, when there is not user reaction corresponding to the certain unit content, the server 100 may predict the understanding about the certain unit content based on the understanding of the user with respect to unit content before and after the certain unit content.

In operation1503, the server 100 may determine the understanding with respect to the entire context of the content based on the understanding with respect to the plurality of unit contents. According to one or more embodiments of the disclosure, the server 100 may determine the understanding with respect to the whole content (entire context) based on a result of comparing the number of unit contents in which the understanding is determined as 'success' with the number of unit contents in which the understanding is determined as 'failure'. According to one or more embodiments of the disclosure, the server 100 may determine the understanding with respect to the whole content as 'success' when the number of unit contents of which the understanding is determined as 'success' is equal to or greater than a certain ratio of the total number of unit contents.

Alternatively, according to one or more embodiments of the disclosure, the server 100 may determine the understanding with respect to the whole content by comparing the number of unit contents in which the understanding is determined as 'success' with the number of unit contents in which the understanding is determined as 'failure' and applying a weight varying depending on the unit content. Because, when the user determines that he/she understands the whole content mainly, the user 1 may not carefully read or skip less important paragraphs. Alternatively, because the user may only carefully watch a part that is particularly interested in from among the entire content, and may skip the other parts.

The weight applied to the content may be determined according to importance or quantity of the content, and two or more kinds of weights may be applied for each unit content. For example, the server 100 may assign higher weight to the unit content including a key context, and may assign higher weight to the unit content having greater amount. The server 100 may determine the understanding with respect to the whole content by multiplying the weights applied to each unit content to a value (e.g., '1' (success) and '0' (failure)) indicating the understanding and adding, and comparing the result with a preset reference value.

The detailed method, performed by the server 100, of determining the understanding with respect to the whole content based on the understanding of the user determined with respect to the unit content is described above with reference to FIG. 7.

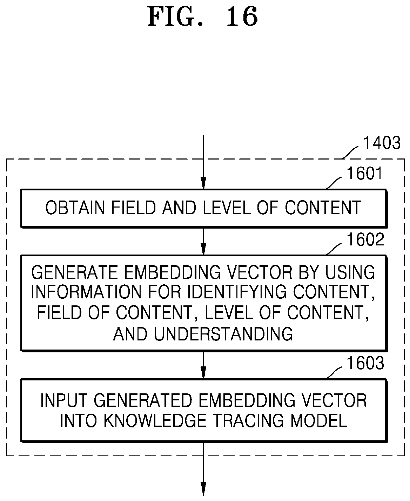

Referring back to FIG. 14, in operation 1403, the server 100 may input the understanding of the user with respect to the content and information about the content into the knowledge tracing model. According to one or more embodiments of the disclosure, the information about the content may include information for identifying the content, field of content, level of content, etc. The detailed processes included in operation 1403 are shown in FIG. 16.

Referring to FIG. 16, the server 100 may obtain the field and level of the content in operation 1601. According to one or more embodiments of the disclosure, the server 100 may determine the field and level of the content by analyzing the content. A method of determining the level of content, by the server 100, is described in detail below.

The server 100 may determine 'level of each field' and 'language level' of the content. The level by field of the content denotes a difficulty in consideration of the field to which the content belongs to, and the language level of the content may denote a difficulty in vocabularies or phrases included in the content regardless of the field.

The server 100 may determine the level by field of the content based on the difficulty and the number of the technical terms included in the content. Also, the server 100 may determine the level by field of the content based on how deep is the detailed field that the content deals with in a certain field. The server 100 may determine the language level of the content based on the difficulty of general terms (not the technical terms) included in the content, the number of words included in each sentence, the length of sentence, etc.

In operation 1602, the server 100 may generate an embedding vector by using the information for identifying the content, the field of the content, the level of the content, and the understanding. The server 100 may convert the information about the content into the embedding vector by using a language model. The server 100 may generate the embedding vector corresponding to each unit content, or may generate the embedding vector corresponding to the whole content.

According to one or more embodiments of the disclosure, the server 100 may generate a unit content vector, a content field vector, and a content level vector with respect to one piece of unit content. Description of each embedding vector refers to the description with reference to FIG. 8.

According to one or more embodiments of the disclosure, the server 100 may generate an input to the knowledge tracing model by combining at least one of the embedding vectors (unit content vector, content field vector, content level vector) generated from the information about the content with the understanding vector indicating the understanding of the user with respect to the content. For example, the server 100 may generate a new embedding vector by combining at least one of the embedding vectors corresponding to the content information with the understanding vector. (e.g., one-hot vector is generated by performing a one-hot encoding on the generated combination)

In operation 1603, the server 100 may input the generated embedding vector to the knowledge tracing model.

Referring back to FIG. 14, in operation 1404, the server 100 may update the knowledge level of the user by using an output from the tracing model. As described above, when receiving an input of the result of consuming the content from the user, the knowledge tracing model may infer the knowledge level of the user (field-specific knowledge level, the language knowledge level).

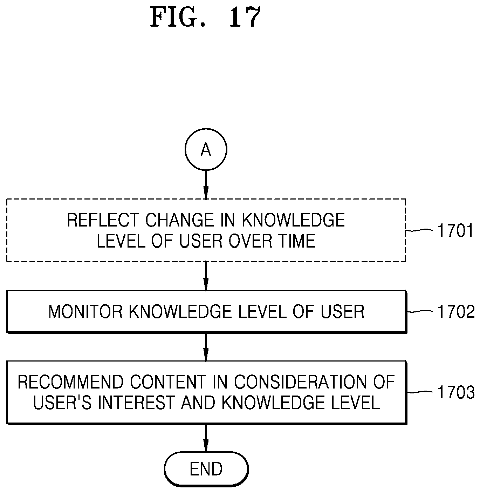

When the knowledge level of the user is updated by performing the above processes, the server 100 may recommend content to the user based on the knowledge level of the user. FIG. 17 is a flowchart for describing processes of recommending content to the user after updating the knowledge level.

The processes included in the flowchart of FIG. 17 may be performed next to operation 1404 of FIG. 14. Referring to FIG. 17, the server 100 may reflect the change in the knowledge level of the user over time in operation 1701. According to one or more embodiments of the disclosure, the server 100 may adjust the knowledge level of the user by reflecting the phenomenon that the knowledge level of the user is declined over time. According to one or more embodiments of the disclosure, the server 100 may adjust so that the knowledge level of the user may be lowered over time after updating the knowledge level of the user by using the knowledge tracing model.

The server 100 may adjust the knowledge level over time by using a linear model or non-linear model. According to one or more embodiments of the disclosure, the server 100 may adjust the knowledge level by using a non-linear model, so that the declining speed of the knowledge level is high soon after the inference of the knowledge level and then is reduced gradually over time.

Operation 1701 is expressed in dash-dot lines, which denotes that operation 1701 may be selectively performed.

In operation 1702, the server 100 may monitor the knowledge level of the user. According to one or more embodiments of the disclosure, the server 100 may monitor the knowledge level of the user, which is updated by the knowledge tracing model, in order to recommend content to the user.

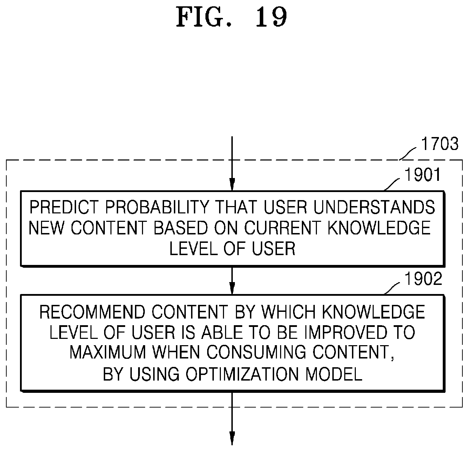

In operation 1703, the server 100 may recommend the content in consideration of the user's interest and the knowledge level of the user. The server 100 may identify the user's interest by various methods. According to one or more embodiments of the disclosure, the server 100 may identify the user's interest based on the field of interest input directly by the user, or may identify the user's interest based on content consuming history of the user. According to one or more embodiments of the disclosure, the server 100 identifies which field of content the user is interested in, and selects at least one piece of content in the corresponding field in consideration of the knowledge level of the user and then recommend the content to the user. A method of selecting the content in consideration of the knowledge level of the user is described below with reference to FIG. 19.

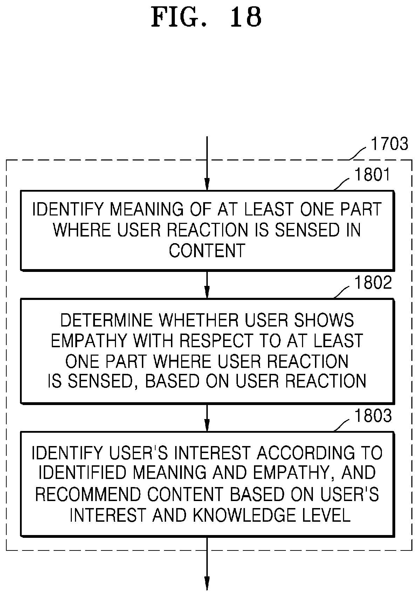

According to one or more embodiments of the disclosure, the server 100 may identify the interest of the user based on the reaction of the user while consuming the content, and this is described in more detail with reference to FIG. 18 later.

The flowchart of FIG. 18 includes detailed processes in operation 1703 of FIG. 17. Referring to FIG. 18, in operation 1801, the server 100 may identify the meaning of at least one part where the reaction of user is sensed in the content.

In operation 1802, the server 100 may determine whether the user shows empathy to the at least one part where the user reaction is sensed, based on the user reaction.

In operation 1803, the server 100 identifies the user's interest according to the meaning identified in operation 1801 and the empathy determined in operation 1802, and may recommend the content based on the user's interest and the knowledge level. According to one or more embodiments of the disclosure, the server 100 may recommend the content having an appropriate difficulty according to the knowledge level of the user, or may recommend the content that is expected to improve the knowledge level of the user.

FIG. 19 shows detailed processes included in operation 1703. Referring to FIG. 19, in operation 1901, the server 100 may predict a probability that the user would understand new content, based on the current knowledge level of the user. For example, when the server 100 predicts the field-specific knowledge level of the user through the knowledge tracing model and knows the field of new content, the server 100 may predict the probability that the user would understand the new content.

In operation 1902, the server 100 may recommend content which may improve the knowledge level of the user to the maximum when used, by using an optimization model (e.g., reinforced learning model). According to one or more embodiments of the disclosure, the server 100 may infer the content that is highly possible to improve the knowledge level of the user through the optimization using the MDP, and then, may recommend the content to the user. Also, according to one or more embodiments of the disclosure, the server 100 may recommend the content by which the knowledge level of the user may be improved to the maximum through another kind of optimization algorithm.

According to one or more embodiments of the disclosure, the knowledge level of the user is traced based on the reaction of the user after consuming the content, and thus, the knowledge level of the user may be continuously traced whenever the user consumes the content. In addition, the user does not need to perform an additional operation for tracing the knowledge level, and thus, user convenience may be improved.

Also, the content is recommended to the user based on the knowledge level that is continuously traced as the user consumes the content, and thus, more appropriate content may be recommended as compared with the content recommendation method according to the related art.

According to one or more embodiments of the disclosure, the method of tracing the knowledge level of the user based on the reaction of the user consuming the content may include sensing the reaction of the user consuming the content, determining understanding with respect to the content based on the reaction of the user, inputting the understanding and information about the content to a knowledge tracing model, and updating the knowledge level of the user by using an output from the knowledge tracing model.

According to one or more embodiments of the disclosure, the knowledge level of the user may denote a probability that the user would understand certain content.

According to one or more embodiments of the disclosure, the determining of the understanding with respect to the content may include determining the understanding corresponding to the reaction of the user by using at least one of a neural network model trained by using training data, in which the understanding of the user is labeled with a combination of one or more reactions, or a neural network model that is trained to cluster combinations of one or more reactions.

According to one or more embodiments of the disclosure, when a plurality of reactions with respect to the content are sensed, the determining of the understanding with respect to the content may include selecting at least one of the plurality of reactions according to the kind of the content, and determining the understanding with respect to the content based on the selected at least one reaction.

According to one or more embodiments of the disclosure, the content includes a plurality of unit contents, and the determining of the understanding may include determining the understanding with respect to each of the plurality of unit contents based on the reaction of the user, comparing the number of unit contents in which the understanding is determined to be 'success' with the number of unit contents in which the understanding is determined to be 'failure', and determining the understanding with respect to the content based on the comparison result.

According to one or more embodiments of the disclosure, the comparing may include assigning a weight to each unit content according to at least one of importance or amount, and applying the weight to the number of unit contents in which the understanding is determined to be 'success' and the number of unit contents in which the understanding is determined to be 'failure' and comparing the weighted results.

According to one or more embodiments of the disclosure, the information about the content may include at least one of information for identifying the content, a field of content, or a level of content.

According to one or more embodiments of the disclosure, the inputting of the embedding vector into the knowledge tracing model may include generating an embedding vector corresponding to a combination of the understanding and the information about the content, and inputting the embedding vector into the knowledge tracing model.

According to one or more embodiments of the disclosure, the sensing of the user reaction may include sensing at least one of a position where gaze of the user is focused, the speed or pattern of changes in the eyes, a change in the pupil size in the user's eyes, a change in the facial expression of the user, a speed taken to consume the content by the user, the number of times that the user stops watching or goes backward during consuming the content, the time taken for the user to consume the content, whether the user consumes up the content, a change in the heart rate of the user, or a change in brain waves of the user.

According to one or more embodiments of the disclosure, the method may further include monitoring the knowledge level of the user, and recommending content to the user in consideration of the knowledge level.

According to one or more embodiments of the disclosure, the recommending of the content may include identifying the meaning of at least one part in the content, where the reaction of the user is sensed, determining whether the user shows empathy to the at least one part based on the user reaction, identifying the user's interest according to the meaning and the empathy, and recommending the content based on the user's interest and the knowledge level.

According to one or more embodiments of the disclosure, the recommending of the content may include predicting a probability that the user would understand new content based on the current knowledge level of the user, and recommending content by which the knowledge level of the user may be improved to the maximum when consuming the content by using an optimization model.

A computing device according to one or more embodiments of the disclosure includes a communication interface for communicating with an external electronic device, a memory for storing a program for tracing the knowledge level of a user and recommending content, and at least one processor, wherein the at least one processor is configured to execute the program to sense a reaction of the user consuming the content, determining understanding with respect to the content based on the user reaction, inputting the understanding and information about the content into a knowledge tracing model, and updating the knowledge level of the user by using an output from the knowledge tracing model.

According to one or more embodiments of the disclosure, the at least one processor, when determining the understanding with respect to the content, is configured to determine the understanding corresponding to the reaction of the user by using at least one of a neural network model trained by using training data, in which the understanding of the user is labeled with a combination of one or more reactions, or a neural network model that is trained to cluster combinations of one or more reactions.

According to one or more embodiments of the disclosure, when a plurality of reactions with respect to the content are sensed, the at least one processor, when determining the understanding with respect to the content, is configured to select at least one of the plurality of reactions according to a kind of the content, and determine the understanding with respect to the content based on at least one selected reaction.

According to one or more embodiments of the disclosure, the content may include a plurality of unit contents, and the at least one processor 120, when determining the understanding, may be configured to determine the understanding with respect to each of the plurality of unit contents based on the reaction of the user, compare the number of unit contents in which the understanding is determined to be 'success' with the number of unit contents in which the understanding is determined to be 'failure', and determine the understanding with respect to the content based on a result of comparison.

According to one or more embodiments of the disclosure, the information about the content may include at least one of information for identifying the content, a field of content, or a level of content.

According to one or more embodiments of the disclosure, the at least one processor may be configured to, when inputting the understanding and the information about the content to the knowledge tracing model, generate an embedding vector corresponding to a combination of the understanding and the information about the content, and input the embedding vector into the knowledge tracing model.

According to one or more embodiments of the disclosure, the at least one processor may be further configured to monitor the knowledge level of the user, and recommend content to the user in consideration of user's interest and the knowledge level of the user.

Various embodiments of the disclosure may be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

The machine-readable storage medium may be provided in the form of a non-transitory storage medium. A "non-transitory" storage medium is a tangible device and may exclude wired, wireless, optical, or other communication links that transport transitory electrical or other signals. The "non-transitory" storage medium does not differentiate between where data is semi-permanently stored in the storage medium and where the data is temporarily stored in the storage medium. For example, the "non-transitory storage medium" may include a buffer in which data is temporarily stored. The computer-readable storage medium may be any available medium that may be accessed by a computer, and includes volatile and non-volatile media and removable and non-removable media. A computer readable medium includes media where data may be permanently stored and media where data may be stored and later overwritten, such as a rewritable optical disc or an erasable memory device.

According to one or more embodiments, the method according to various embodiments disclosed in the present document may be provided to be included in a computer program product. The computer program product may be traded between a seller and a buyer as a product. The computer program product may be distributed in the form of a machine-readable storage medium e.g., compact disc read only memory (CD-ROM)), or be distributed (e.g., downloaded or uploaded) online via an application store, or between two user devices (e.g., smart phones) directly. If distributed online, at least part of the computer program product (e.g., downloadable app) may be temporarily generated or at least temporarily stored in the machine-readable storage medium, such as memory of the manufacturer's server, a server of the application store, or a relay server.

The above description of the disclosure is provided for the purpose of illustration, and it would be understood by those skilled in the art that various changes and modifications may be made without changing technical conception and essential features of the disclosure. For example, there may be attained a desired result according to the present disclosure even though the techniques are carried out through other methods and procedures different from the aforementioned, and/or even though the system, the structure, the units and the circuits are coupled in other manners different from the aforementioned, or substituted or replaced with other components or equivalents. Thus, the embodiments of the disclosure set forth herein or shown above are to be interpreted in an illustrative and non-limiting sense. For example, each component described to be of a single type can be implanted in a distributed manner. Likewise, components described to be distributed can be implanted in a combined manner.

The scope of the disclosure is defined by the following claims rather than by the detailed description of the embodiments of the disclosure. It shall be understood that all modifications and embodiments conceived from the meaning and scope of the claims and their equivalents are included in the scope of the disclosure.

## Claims

1. A method of tracing a knowledge level of a user, the method comprising:
sensing a reaction of the user consuming content;
determining an understanding of the user with respect to the content based on the reaction of the user;
inputting the understanding and information about the content into a knowledge tracing model; and
updating the knowledge level of the user based on an output from the knowledge tracing model.

2. The method of claim 1, wherein the knowledge level of the user denotes a probability that the user understands certain content.

3. The method of any one of claim 1 and claim 2, wherein the determining the understanding with respect to the content comprises determining the understanding corresponding to the reaction of the user by using at least one of a neural network model trained by using training data, in which the understanding of the user is labeled with a combination of one or more reactions, or a neural network model that is trained to cluster combinations of one or more reactions.

4. The method of any one of claims 1 to 3, wherein the determining the understanding of the content comprises:
based a plurality of reactions with respect to the content being sensed, selecting at least one reaction of the plurality of reactions according to a type of the content; and
determining the understanding with respect to the content based on the selected at least one reaction.

5. The method of any one of claims 1 to 4, wherein the content includes a plurality of unit contents, and
wherein the determining the understanding comprises:
determining the understanding with respect to each of the plurality of unit contents based on the reaction of the user;
comparing a number of unit contents in which the understanding is determined to be a success with a number of unit contents in which the understanding is determined to be a failure; and
determining the understanding with respect to the content based on a result of the comparing.

6. The method of any one of claims 1 to 5, wherein the comparing comprises:
assigning a weight to each unit content of the plurality of unit contents according to at least one of importance or amount; and
applying the weight to the number of unit contents in which the understanding is determined to be 'a success and the number of unit contents in which the understanding is determined to be a failure and comparing weighted results.

7. The method of any one of claims 1 to 6, wherein the information about the content comprises at least one of information for identifying the content, a field of the content, or a level of the content.

8. The method of any one of claims 1 to 7, wherein the sensing the reaction of the user comprises sensing at least one of a position where a gaze of the user is focused, a speed or pattern of changes in the gaze, a change in a pupil size of eyes of the user, a change in a facial expression of the user, a speed of consumption of the content by the user, a number of times that the user stops watching or goes backward while consuming the content, a time taken by the user to consume the content, whether the user completely consumes the content, a change in a heart rate of the user, or a change in brain waves of the user.

9. The method of any one of claims 1 to 8, further comprising:
monitoring the knowledge level of the user; and
recommending content to the user based on an interest of the user and the knowledge level of the user.

10. The method of any one of claims 1 to 9, wherein the recommending the content comprises:
identifying a meaning of at least one part of the content for which the reaction of the user is sensed;
determining whether the user shows empathy to the at least one part of the content based on the reaction of the user;
identifying the interest of the user based on the meaning and the empathy; and
recommending the content based on the interest and the knowledge level.

11. The method of any one of claims 1 to 10, wherein the recommending the content comprises:
predicting a probability that the user understands new content based on a current knowledge level of the user; and
recommending content by which the knowledge level of the user is improved to a maximum when consuming the content, by using an optimization model.

12. A computing device comprising:
a communication interface 110 configured to communicate with an external electronic device;
a memory 130storing a program for tracing a knowledge level of a user and recommending content; and
at least one processor 120 operatively connected to the communication interface 110 and the memory 130,
wherein the at least one processor 120is configured to execute the program to:
sense a reaction of a user consuming content,
determine an understanding of the user with respect to the content based on the reaction of the user,
input the understanding and information about the content into a knowledge tracing model, and
update the knowledge level of the user based on an output from the knowledge tracing model.

13. The computing device of claim 12, wherein, for determining the understanding with respect to the content, the at least one processor is further configured to execute the program to determine the understanding corresponding to the reaction of the user by using at least one of a neural network model trained by using training data, in which the understanding of the user is labeled with a combination of one or more reactions, or a neural network model that is trained to cluster combinations of one or more reactions.

14. The computing device of any one of claims 12 and 13, wherein, for determining the understanding with respect to the content, the at least one processor is further configured to execute the program to:
based on a plurality of reactions with respect to the content being sensed, select at least one reaction of the plurality of reactions according to a type of the content, and
determine the understanding with respect to the content based on the selected at least one reaction.

15. The computing device of any one of claims 12 to 14, wherein the content includes a plurality of unit contents, and
wherein, for determining the understanding, the at least one processor is further configured to execute the program to:
determine the understanding with respect to each of the plurality of unit contents based on the reaction of the user,
compare a number of unit contents in which the understanding is determined to be a success with a number of unit contents in which the understanding is determined to be a failure, and
determine the understanding with respect to the content based on a result of comparison.
